# EUROPEAN PATENT SPECIFICATION

(11) **EP 1 208 021 B1**
(45) Date of publication and mention of the grant of the patent: **15.10.2003**
(21) Application number: 00959554.7
(22) Date of filing: 29.08.2000
(51) Int. Cl.: B60R 21/01

(54) **CONTROLLER FOR OCCUPANT RESTRAINT SYSTEM**
STEUERGERÄT FÜR PERSONENRÜCKHALTESYSTEM
COMMANDE POUR SYSTEME DE RETENUE D'UN OCCUPANT

(30) Priority: 03.09.1999 US 152418 P
(43) Date of publication of application: 29.05.2002
(73) Proprietor: Siemens VDO Automotive Corporation, Auburn Hills, Michigan 48326 (US)
(72) Inventor: QUAIL, Alanna, Marie, Oakland Township, MI 48306 (US); GARCIA, Emmanuel, Sterling Heights, MI 48310 (US)
(74) Representative: Humphrey-Evans, Edward John
(86) International application number: US0023687
(87) International publication number: WO01017825

(56) References cited:
- WO-A-98/54638
- DE-A- 19 753 163
- US-A- 5 626 359
- R L PHEN ET AL: "Advanced Air Bag Technology Assessment - Final Report" -, April 1998 (1998-04), XP002137509

## Description

### BACKGROUND OF THE INVENTION

### 1. Field of the Invention.

This invention relates to a unique method and system for optimizing deployment of an occupant restraint system. The occupant restraint system includes a plurality of sensors that provide multiple input signals to a processing unit that has a fuzzy logic control system for processing the multiple input signals to generate multiple output signals that optimize deployment of the occupant restraint system.

### 2. Related Art.

Many vehicles have airbag systems and seat belt mechanisms that are used to restrain occupants within a vehicle under certain deceleration requirements. If the vehicle decelerates suddenly, such as when a collision occurs, occupants will tend to continue to move forward due to inertial effects. An airbag is deployed under these circumstances to decelerate the occupants' impact speed before they contact a vehicle structure, such as a steering wheel or dashboard. Additionally, if the occupant is wearing a seat belt, pretensioner and retractor mechanisms also assist in controlling motion of the occupant during a collision. The deployment of the airbag and the utilization of the seat belt mechanisms decrease the likelihood of serious injury for the occupants.

If vehicle occupants are positioned too close to the airbag or if a child seat is buckled to the seat, it may be desirable to vary the inflation and deflation rates of the airbag or to prohibit deployment of the airbag to prevent injury to the occupant from the impact of the airbag. It may also be desirable to control the seat belt pretensioner and retractor mechanisms to further prevent injury to occupants.

Occupant sensing systems are used to provide information to optimize or suppress deployment of an airbag if an occupant is determined to be too close to the airbag. These systems typically use a single input to a controller to determine whether or not the airbag should be deployed. The input is usually based on measurement of the seat occupant's weight or monitoring of the occupant's position relative to the airbag deployment area. Based on this input, the controller sends an output signal to control airbag inflation or deflation if a collision occurs.

These systems often do not consider other important factors such as child seat usage, seat belt usage, pre-crash vehicle data, crash severity data, braking data, etc in determining whether or not to deploy the airbag. Further these systems do not utilize multiple outputs to control both the airbag deployment and the seat belt mechanisms to minimize injury to the occupants.

Thus, it is desirable to have an occupant restraint control system that can utilize multiple inputs to provide multiple output signals to optimize deployment of the occupant restraint system including the operation of seat belt pretensioner and retractor mechanisms and the inflation/deflation rates of the airbag. The system should be easy to install and maintain and should also be easily adaptable to any combination of sensors.

WO98/54632 (Automotive Technologies International) provides a smart airbag system. R.L. Phen et al has reported a review of vehicle safety features in "Advanced Air Bag Technology Assessment - Final Report". Each of these two documents disclose the preambles of independent claims 1 and 16.

### SUMMARY OF THE INVENTION

In accordance with a first aspect of the invention, there is provided an occupant restraint system comprising the features of claim 1.

In one disclosed embodiment, the occupant restraint system includes at least one modifier sensor for generating a modifier signal to enable or disable an occupant restraint system, an occupant sensor assembly for generating an occupant signal representing multiple occupant characteristics, and a collision sensor assembly for generating a collision signal representing vehicle collision characteristics. The processing unit receives the input signals including the modifier, occupant, and collision signals and generates at least one output signal based on the input signals that optimizes deployment of the occupant restraint system.

In a preferred embodiment, the at least one modifier sensor can include various combinations of the following sensors: an occupant presence sensor for determining whether an occupant is present within a predetermined area within the vehicle; a child seat sensor for determining whether a child seat is properly positioned within the predetermined area; and a seat belt usage sensor for determining whether a seat belt harness is being utilized by the occupant. The occupant presence sensor generates an occupant signal that is positive when the occupant is in the predetermined area and negative when the occupant is not in the predetermined area. The child seat sensor generates a child seat signal that is positive when the child seat is properly positioned within the predetermined area and negative when the child seat is not present or improperly positioned within the predetermined area. The seat belt usage sensor generates a seat belt signal that is positive when the seat belt harness is in an engaged position and negative when the seat belt harness is in a disengaged position. The modifier signal is compiled from the combination of the occupant presence, child seat, and seat belt signals.

In a further preferred embodiment, the occupant sensor assembly includes a weight sensor for generating a weight signal representing occupant weight and an occupant proximity sensor for generating an occupant proximity signal representing occupant position relative to a deployment area for the occupant restraint system. The occupant signal is compiled from the combination of the weight and proximity signals. Additionally, the collision sensor assembly includes a severity sensor for generating a severity signal representing collision characteristics occurring at the time of or just after collision and a pre-collision sensor for generating a pre-collision signal representing vehicle characteristics occurring just before collision. The collision signal is compiled from the combination of the severity and pre-collision signals.

Thus, the input to the processing unit is comprised of a plurality of input signals including the modifier signal comprised of an occupant presence signal, a child seat signal, and a seat belt usage signal, the occupant signal comprised of an occupant weight signal and an occupant proximity signal, and the collision signal comprised of a collision severity signal and a pre-collision signal. In the preferred embodiment, the at least one output signal is comprised of a plurality of output signals. These output signals can be any of various combinations of the following signals: a multi-stage inflation control signal for controlling the profile of the airbag; a variable venting control signal for controlling deflation speed of the airbag; and a retractor control signal for controlling the retraction force of the seat belt retractor mechanism. Further, the processing unit preferably includes a fuzzy logic control system for optimizing the plurality of output signals based on the plurality of input signals.

In accordance with another aspect of the invention, there is provided a method for controlling an occupant restraint system comprising the features of claim 16.

The modifier, occupant, and collision signals are transmitted as multiple input signals to a processing unit and at least one output signal is generated based on the input signals to optimize deployment of the occupant restraint system.

One advantage of this system is that multiple inputs are used to specifically tailor multiple outputs for controlling the occupant restraint system. All of the inputs are combined and are necessary to produce the required outputs. The application of a fuzzy logic control system to all of these independent and variable inputs produces the proper control signals for the airbag and seat belt restraint systems while optimizing the total system response in real time. As a result, the tailored response of the occupant restraint system will have adapted to vehicle conditions sensed prior to and during the collision.

These and other features of the present invention can be best understood from the following specification and drawings, the following of which is a brief description.

### BRIEF DESCRIPTION OF THE DRAWINGS

Figure 1 is an environmental view showing a seat occupant and a restraint system.
Figure 2 is a perspective view of a seat with a seat belt system.
Figure 3 is a view similar to Figure 1 but showing a child seat.

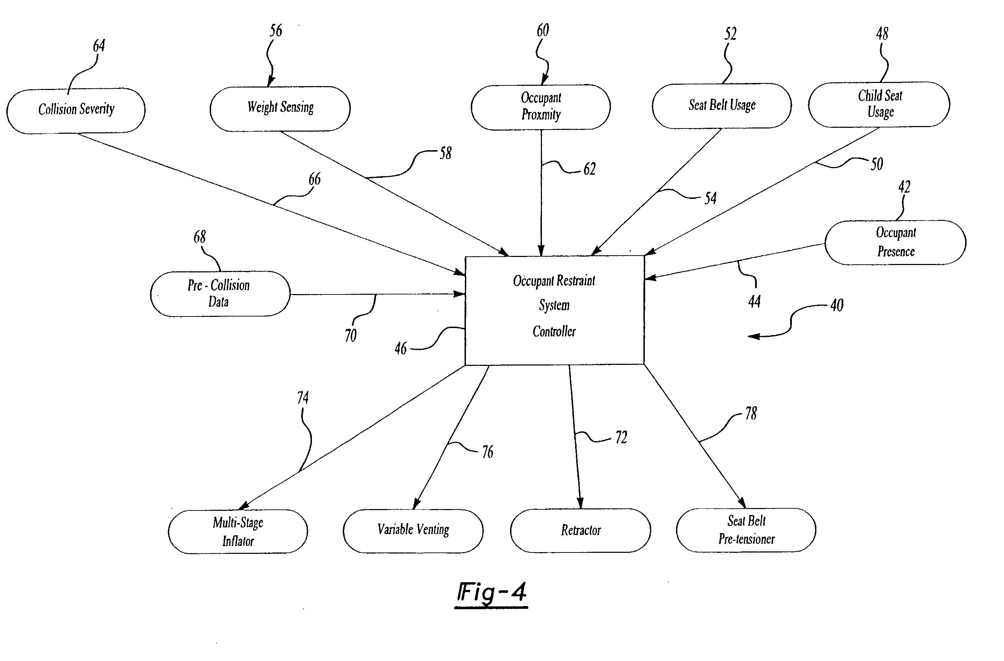

Figure 4 is a schematic diagram of a control system for the occupational restraint system.
Figure 5 is a schematic diagram of the multiple input and output signals used for optimal deployment of the occupant restraint system.
Figure 6 is a flow chart of the control process for optimizing deployment of the occupant restraint system.

### DETAILED DESCRIPTION OF AN EXEMPLARY EMBODIMENT

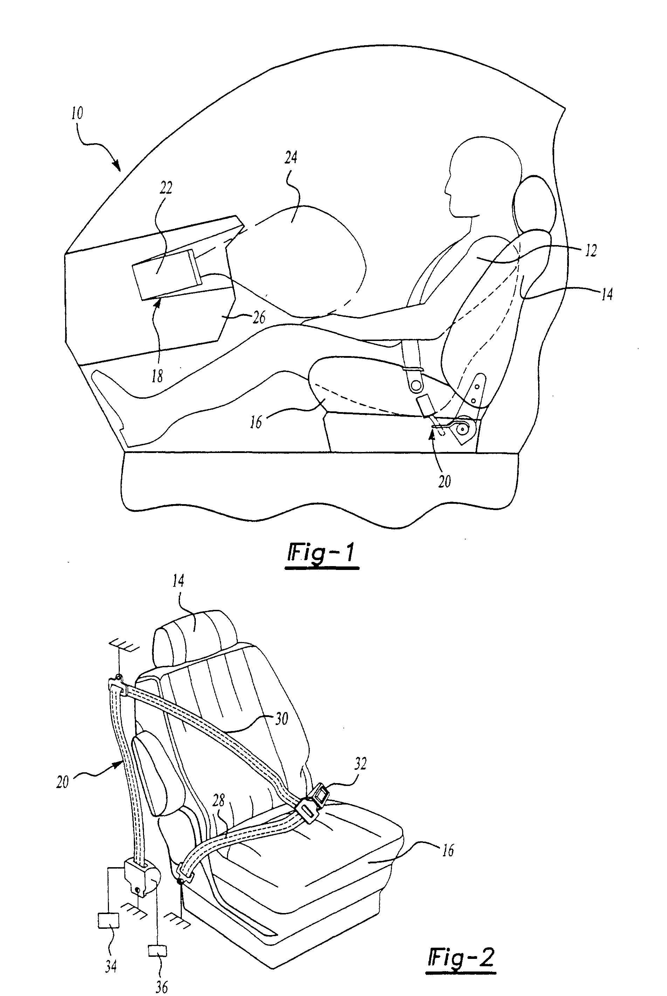

A vehicle is shown generally at 10 in Figure 1 with an occupant 12 seated in a seat having a seat back 14 supported with respect to a seat bottom 16. The vehicle is equipped with an occupant restraint system that includes an airbag system 18 and a seat belt system 20 that are used to restrain occupants 12 within the vehicle 10 under certain predetermined deceleration requirements. If the vehicle decelerates suddenly, such as when a collision occurs, occupants 12 will tend to continue to move forward due to inertial effects. An airbag controller 22 deploys an airbag 24 under predetermined collision circumstances to decelerate the occupants' impact speed before they contact a vehicle structure, such as a steering wheel or dashboard 26.

The seat belt system 20, shown in Figure 2, typically includes a lap belt portion 28 and a harness portion 30 that are fastened with a buckle 32 to secure the occupant 12 in the seat. The seat belt system 20 also includes a pretensioner mechanism 34 that provides a predetermined tension force on the occupant 12 via the harness portion 30 when the seat belt 20 is in the engaged position and a retractor mechanism 36 that retracts the harness portion 30 after the harness 30 has been extended. If an occupant 12 is buckled to the seat the pretensioner 34 and retractor 36 mechanisms also assist in controlling motion of the occupant 12 during a collision. The pretensioner 34 and retractor 36 mechanisms are shown schematically in Figure 2 to indicate that any type of pretensioner 34 or retractor 36 mechanism known in the art can be used. The deployment of the airbag 24 and the utilization of the seat belt mechanisms 34, 36 decrease the likelihood of serious injury for the occupants 12.

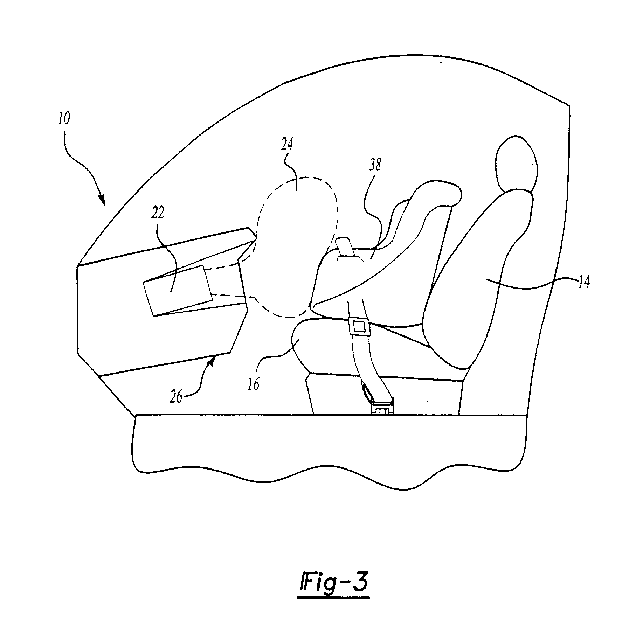

A child seat 38 could also be secured to the seat, shown in Figure 3. If the child seat 38 is facing rearward or is improperly positioned on the seat the airbag 24 should not be deployed. However, under certain predetermined conditions when the child seat 38 is facing forward as shown in Figure 3, it may be desirable to deploy the airbag 24 at a lower deployment force to prevent injury to the child.

The subject invention relates to a control system, shown generally at 40, that optimizes deployment of the occupant restraint system. A plurality of sensors are used to provide multiple input signals that are processed by the control system 40 to produce multiple output signals for controlling the airbag inflation/deflation rates and the seat belt mechanism 34, 36. A fuzzy logic control system is preferably used to process the multiple input signals and to generate the multiple output signals to optimize deployment of the occupant restraint system. This will be discussed in greater detail below.

The system includes an occupant presence sensor 42 that determines whether there is an occupant 12 positioned in a predetermined area that will be affected by the occupant restraint system. Any type of sensor 42 could be used including optical, contact, or non-contact type sensors for example. The occupant presence sensor 42 generates an occupant presence signal 44 that is sent to a central processing unit (CPU) or a similar type central controller 46. The occupant presence signal 44 will either be a positive signal indicating that the occupant 12 is in the predetermined area or a negative signal indicating the occupant 12 is not in the predetermined area. It should be understood that the terms "positive" and "negative" do not indicate a mathematical value and are simply descriptive terms to differentiate between two different signal designations, similar to an "on/off" designation, for example. If the occupant 12 is in the predetermined area, additional input signals will be processed, but if the occupant 12 is not in the predetermined area the occupant restraint system will not be activated. Thus, transmission of the negative occupant presence signal to the CPU 46 disables the occupant restraint system and prevents deployment of the airbag 24 and activation of the pretensioner 34 and retractor 36 mechanisms. This prevents unnecessary use of the airbag 24 and decreases replacement costs.

The system also includes a child seat sensor 48 for determining whether a child seat 38 is properly positioned within a predetermined area. Any type of sensor 48 could be used including optical, contact, or non-contact type sensors for example. The child seat sensor 48 generates a child seat signal 50 that is sent to the CPU 46. The child seat signal 50 will either be a positive signal indicating that the child seat 38 is present and is in a properly installed position, i.e., facing forward, or a negative signal indicating the child seat 38 is not in the predetermined area or is improperly positioned, i.e. facing rearward. As discussed above, the terms "positive" and "negative" do not indicate a mathematical value and are simply descriptive terms to differentiate between two different signal designations. If the child seat 38 is properly positioned, additional input signals will be processed, but if the child seat 38 is properly positioned or is not present, the airbag 24 will not be deployed.

The system also includes a seat belt usage sensor 52 for determining whether the occupant 12 is utilizing a seat belt harness 30 and/or lap belt 28. Any type of seat belt usage sensor 52 known in the art could be used including optical, contact, or non-contact type sensors for example. The seat belt usage sensor 52 generates a seat belt usage signal 54 that is sent to the CPU 46. The seat belt usage signal 54 will either be a positive signal indicating that the seat belt 20 is engaged or a negative signal indicating the seat belt 20 is disengaged. As discussed above, the terms "positive" and "negative" do not indicate a mathematical value and are simply descriptive terms to differentiate between two different signal designations. If the seat belt 20 is engaged, additional input signals will be processed. If the seat belt 20 is disengaged additional input signals will be processed but the pretensioner 34 and retractor 36 mechanisms will not be deployed.

The occupant presence 42, child seat 48, and seat belt usage 52 sensors are referred to as modifier sensors because the sensors 42, 48, 52 are on/off type inputs that can enable or disable certain outputs. Thus, the occupant presence 44, child seat 50, and seat belt usage 54 signals are referred to as modifier signals. Any combination of the above referenced modifier sensors and signals can be used as inputs to the CPU 46. Optionally, additional modifier sensors could be used to provide additional input to the CPU 46.

The system also includes a weight sensor 56 that generates a weight signal 58 representing occupant weight. The weight sensor 56 can be any type of weight measuring sensor assembly known in the art and can include of a plurality of sensors, such as strain gages for example, to measure occupant weight. An occupant proximity sensor 60 generates an occupant proximity signal 62 representing occupant position relative to a deployment area for the airbag 24. Any type of proximity sensor 60 can be used including optical, contact, or non-contact type sensors for example. The weight 56 and proximity 60 sensors are referred to as occupant sensors. These sensors 56, 60 generate an occupant signal, comprised of the weight 58 and proximity 62 signals, that is sent to the CPU 46 as input for determining inflation/deflation rates for the airbag 24. Additional occupant sensors and occupant signals could also be used to provide additional input information to the CPU 46.

The system includes a collision sensor assembly with a severity sensor assembly 64 that generates a severity signal 66 representing vehicle collision characteristics occurring at the time of or just after collision. These characteristics can include vehicle speed, position, and/or braking data, for example. The system can optionally include a pre-collision sensor assembly 68 for generating a pre-collision signal 70 representing vehicle characteristics occurring just before collision. These characteristics can include vehicle speed, orientation, and/or braking data, for example. The severity 64 and pre-collision 68 sensor assemblies are preferably comprised of multiple sensors, well known in the art, for measuring and monitoring, vehicle speed, braking force, acceleration, deceleration, etc.

Multiple input signals comprised of any of various combinations of the occupant presence 44, child seat 50, seat belt usage 54, occupant weight 58, occupant proximity 62, severity, and/or pre-collision 70 signals are generated and transmitted to the CPU 46. The CPU 46 receives and processes these input signals and generates multiple output signals that optimize control of the occupant restraint system.

The output signals are comprised of any of various combinations of the following signals. A retractor control signal 72 controls deployment of the seat belt retractor mechanism 36 to reduce forward momentum of the occupant 12. A multi-stage inflation control signal 74 is used to control the inflation profile of the airbag 24. A variable venting control signal 76 is used to control deflation speed of the airbag 24. Another output signal can include a seat belt pretensioner signal 78 that is used to control the tension force on the harness portion 30 of the seat belt 20. Thus, the multiple input signals are processed by the CPU 46, which then generates the multiple output signals including the retractor 72, multi-stage inflation 74, variable venting 76, and/or pretensioner 78 control signals. The CPU 46 utilizes a fuzzy logic control system to optimize the plurality of output signals based on the plurality of input signals to provide optimal deployment of the airbag 24 and seat belt mechanisms 34, 36 based on the type of occupant 12, the position of the occupant 12, the proximity of the occupant 12 to the airbag 24, etc.

Fuzzy logic control systems are well known in the art. The fuzzy logic control system encompasses and expands on Boolean logic. In Boolean logic, events are designated with a "1" or "0" value. Thus, there is only a choice of two different values to describe or designate an event. In a fuzzy logic control system all values between "1" and "0" are used, allowing the choice of multiple values to describe or designate an event. Fuzzy logic control systems also allow classification overlapping, which is strictly forbidden in a Boolean system.

In a control application, the fuzzy logic system preferably includes the following features: membership functions, rules, rule evaluation, and defuzzification. Membership functions equate linguistic names to the values between "0" and "1." The rules include "IF/THEN" statements that use predetermined specifications and data to control the system. Rule evaluation involves the process of combining multiple inputs and applying multiple rules. Based on the input values, one or all of the rules can be used to control the system to some degree. During this step of the process, the rule results are distilled into one fuzzy shape. During the defuzzification step, the result is translated back into a single value that is used to control the airbag and/or seat belt mechanisms.

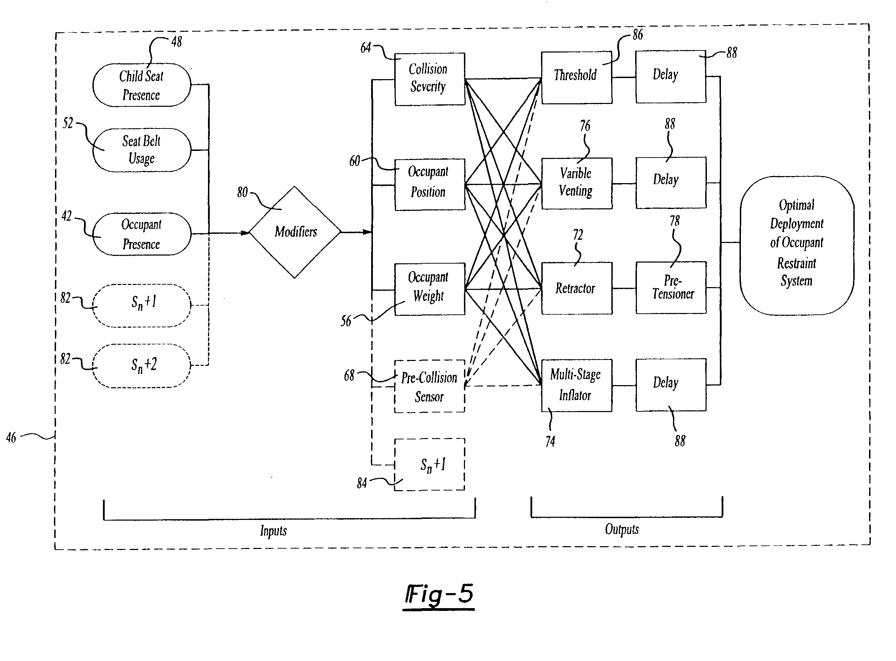

By utilizing a fuzzy logic control system, deployment of the airbag 24 and/or seat belt mechanisms 34, 36 can be specifically tailored to different occupants 12 based on size, weight, position, etc. As shown in Figure 5 and as discussed above, the occupant presence 42, child seat 48, and seat belt usage 52 sensors are referred to as modifiers 80 because these sensors 42, 48, 52 are on/off type inputs that can enable or disable certain outputs. In addition to these modifiers 80, other sensors 82 could be used to provide additional input to the CPU 46.

Once the modifiers 80 are processed, additional inputs are evaluated. The additional input includes the occupant weight sensor 56, the occupant position sensor 60 for generating an occupant position signal indicating the position and/or proximity of the occupant 12 relative to the airbag deployment area, the collision severity sensor 64 for measuring multiple collision characteristics occurring at the time of or just after collision, and the pre-collision sensor 68 for measuring vehicle characteristics occurring just before collision. In addition to these inputs, other sensors 84 could be used to provide additional input to the CPU 46.

Once the CPU 46 processes the variable data from the occupant weight sensor 56, the occupant position sensor 60, the collision severity sensor 64, and the pre-collision sensor 68, the fuzzy logic control system is used to process the information and to generate the optimal output control decision. Each of the variable data inputs, i.e. the non-modifier inputs, has a descriptive membership function that describes ranges over their respective domain. The fuzzy logic process combines all of the inputs and control values for the variable outputs. Preferably the outputs include any combination of the multi-stage inflator signal 74, the retractor force signal 72, the pretensioner signal 78 and/or the variable venting signal 76. Additional output signals can also be generated such as a threshold signal 86, for example.

The multi-stage inflator signal 74 allows the system to control the airbag's pressure profile. The airbag 24 can be initially inflated from 75% to 100% of the peak pressure. The threshold signal 86 is the first stage of the multi-stage inflator and determines the firing of the first squib. The retractor force signal 72 allows the seat belt 20 to control some of the occupant's forward momentum during the collision, and preferably applies a constant force to provide a smoother transition for the occupant 12. The variable venting signal 76 allows the airbag 24 to deflate at different speeds to control the ridedown of the occupant 12 after airbag deployment. The seat belt pretensioner signal 78 enables the pretensioner 34 via the seat belt usage sensor 52. The other outputs, i.e., the threshold 86, variable venting 76, and multi-stage inflator 74 signals preferably have calculated delays 88, associated within them to let the seat belt pretensioner 34 and retractor 36 mechanisms provide the initial control of the occupant's motion.

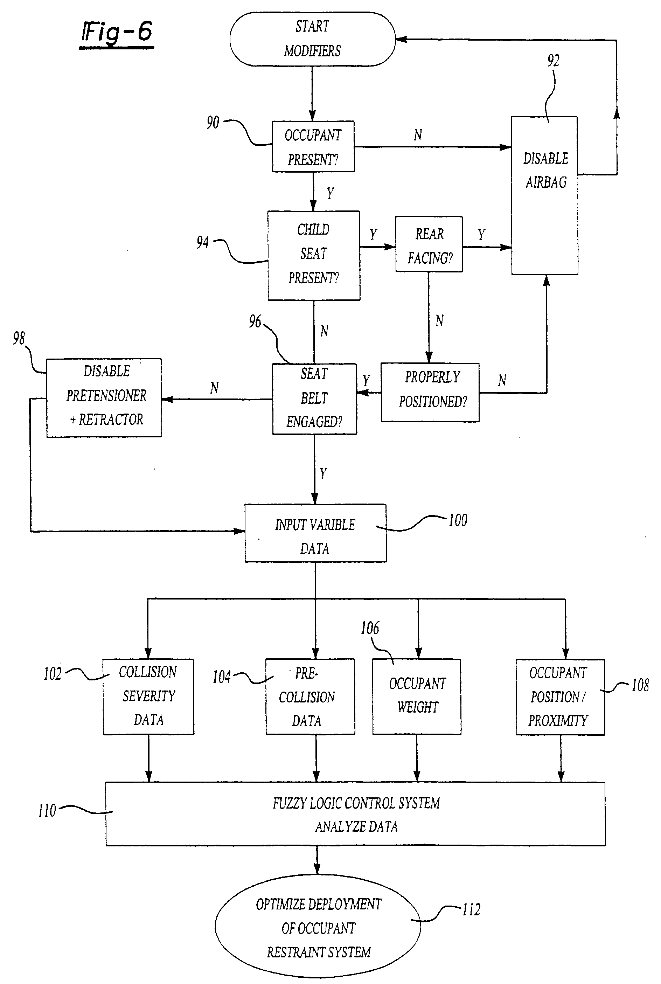

A flow chart of the control process for optimizing deployment of the occupant restraint system is shown in Figure 6. First the modifiers 80 are processed. The modifiers 80 can be processed in any order. In one embodiment, the first step is determining the occupant presence 90. If the occupant is present, then the next modifier is processed. If the occupant is not present then the airbag 24 is disabled 92. Next, the CPU 46 determines whether there is a child seat 38 present 94. If the child seat 38 is not present, then the next modifier is processed. If the child seat 38 is present, the CPU 46 determines whether the child seat 38 is properly positioned. If the child seat 38 is facing towards the rear of the vehicle or is otherwise determined to be improperly installed, the airbag 24 is disabled 92. If the child seat 38 is forward facing or otherwise determined to be properly positioned, then the next modifier is processed.

Next, the CPU 46 determines whether or not the seat belt 20 is engaged 96. If the seat belt 20 is disengaged, then the pretensioner 34 and retractor 36 mechanisms are disabled 98. If the seat belt 20 is engaged, then any additional modifiers 80 would be processed. Once all of the modifiers 80 are processed, the variable data is processed 100. The variable data includes the collision severity data 102, pre-collision data 104, occupant weight data 106, and occupant position/proximity data 108, plus any other additional variable data. As discussed in detail above, the CPU 46 utilizes a fuzzy logic control system to analyze the data 110 and based on this analysis generates an output signal to optimize deployment of the occupant restraint system 112.

The method for controlling the occupant restraint system includes the following steps. At least one modifier signal is generated to enable or disable an occupant restraint system based on satisfaction of a predetermined condition. For example, the modifier signal can be comprised of a single signal or a plurality of signals comprised of any combination of the following signals: the occupant presence signal 44, the child seat signal 50, or the seat belt usage signal 54. A positive occupant presence signal 44 indicates that the occupant 12 is present in a predetermined area and a negative occupant presence signal 44 indicates that the occupant 12 is not in the predetermined area. A positive child seat signal 50 indicates that the child seat 38 is properly installed within the predetermined area and a negative child seat signal indicates that the child seat 38 is not present or is improperly installed within the predetermined area. A positive seat belt usage signal 54 indicates that the seat belt 20 is in an engaged position and a negative seat belt usage signal 54 indicates that the seat belt 20 is in a disengaged position.

An occupant signal is generated representing multiple occupant characteristics such occupant weight and proximity. A collision signal is generated representing vehicle collision characteristics such as speed, position, and braking, for example. The modifier, occupant, and collision signals are transmitted as multiple input signals to the processing unit and at least one output signal is generated based on the input signals to optimize deployment of the occupant restraint system. Additional steps include modifying the output signal to disable the occupant restraint system when either the negative occupant presence signal 44, the negative child seat signal 50, or the negative seat belt 54 usage signal is generated and continuing to process the output signal when either the positive occupant presence signal 44, the positive child seat signal 50, or the positive seat belt usage signal 54 is generated.

The output signal is used to control inflation and deflation of the airbag 24 and to control operation of the pretensioner mechanism 34 and retractor mechanism 36. The output signal can control various functions of the airbag 24 and seat belt 20 systems. A multi-stage inflation control signal 74 for controlling the pressure profile of the airbag 24, a variable venting control signal 76 for controlling deflation speed of the airbag 24, and a retractor control signal 72 for controlling the retraction force of the seat belt retractor mechanism 34 are just some of the output signals that can be generated by the CPU 46.

A fuzzy logic analysis process is used to generate the output signal based on the plurality of input signals. As discussed in detail above, the fuzzy logic analysis process includes the steps of creating membership functions by assigning names to predetermined values within a designated range; designating rules to be applied to the input signals; evaluating the rules and input signals to form an optimal control decision; and translating the optimal control decision into the output signal.

Optionally, the CPU 46 can be programmed with a neural network for learning vehicle characteristics unique to vehicle type. Each vehicle type has different passenger compartment characteristics. For example, sport utility vehicles have larger passenger compartments than compact cars. To incorporate the subject occupant restraint control system into multiple vehicle types without having to re-develop, re-design, and re-program for each vehicle type, further adaptability can be built into the system by using a neural network. The addition of a neural network would create a neuro-fuzzy system that could learn about the specific vehicle type during the developmental stages such as testing. The fuzzy logic analysis process could then be optimized for the specific vehicle type.

Although a preferred embodiment of this invention has been disclosed, it should be understood that a worker of ordinary skill in the art would recognize many modifications come within the scope of this invention. For that reason, the following claims should be studied to determine the true scope and content of this invention.

## Claims

1. an occupant restraint system (40) comprising:
at least one modifier sensor that generates a modifier signal to enable or disable an occupant restraint system;
an occupant sensor assembly (56, 60) that generates an occupant signal representing multiple occupant characteristics;
a collision sensor assembly (64) that generates a collision signal representing vehicle collision characteristics; and
a processing unit (110) for receiving input comprised of said modifier, occupant, and collision signals and for generating at least one output signal based on said input that optimizes deployment of said occupant restraint system;
**characterised in that** said at least one modifier sensor includes an occupant presence sensor (42) for determining whether an occupant is present within a predetermined area within the vehicle and wherein said modifier signal is generated as a positive modifier signal when the occupant is in said predetermined area and generates a negative modifier signal when the occupant is not in said predetermined area.

2. A system according to claim 1 wherein transmission of said negative modifier signal to said processing unit is operable to disable said occupant restraint system.

3. A system according to claim 1 or 2 wherein said at least one modifier sensor comprises a child seat sensor (48) for determining whether a child seat is properly positioned within a predetermined area and wherein said modifier signal is generated as a positive modifier signal when said child seat is properly positioned within said predetermined area and is generated as a negative modifier signal when said child seat is improperly positioned within said predetermined area.

4. A system according to claim 3 wherein transmission of said negative modifier signal to said processing unit disables said occupant restraint system.

5. A system according to claim 3 wherein said at least one modifier sensor includes a child seat sensor operable to determine whether a child seat is forward or rearward facing.

6. A system according to any one of claims 1 to 3 wherein said at least one modifier sensor comprises a seat belt usage sensor (52) for determining whether a seat belt harness is being utilized by the occupant and wherein said modifier signal is generated as a positive modifier signal when said seat belt harness is in an engaged position and is generated as negative modifier signal when said seat belt harness is in a disengaged position.

7. A system according to claim 6 wherein said at least one output signal includes a retractor control signal (72) for controlling deployment of a seat belt retractor to reduce forward momentum of an occupant when said processing unit receives a positive modifier signal and for disabling said seat belt retractor when said processing unit receives a negative modifier signal.

8. A system according to claim 1 wherein said at least one modifier sensor comprises an occupant presence sensor (42) for determining whether an occupant is present within a predetermined area within the vehicle, a child seat sensor (48) for determining whether a child seat is properly positioned within said predetermined area, and a seat belt usage sensor (52) for determining whether a seat belt harness is being utilized by the occupant and wherein said occupant presence sensor is operable to generate an occupant signal that is positive when the occupant is in said predetermined area and negative when the occupant is not in said predetermined area, said child seat sensor being operable to generate a child seat signal that is positive when said child seat is properly positioned within said predetermined area and negative when said child seat is improperly positioned within said predetermined area, and said seat belt usage sensor being operable to generate a seat belt signal that is positive when said seat belt harness is in an engaged position and negative when said seat belt harness is in a disengaged position, said modifier signal being comprised of said occupant present, child seat and seat belt signals.

9. A system according to claim 1 wherein said occupant sensor assembly includes a weight sensor (56) for generating a weight signal representing occupant weight and an occupant proximity sensor for generating an occupant proximity signal representing occupant position relative to a deployment area for said occupant restraint system, said occupant signal being comprised of said weight and proximity signals.

10. A system according to claim 9 wherein said collision sensor assembly includes a severity sensor (64) for generating a severity signal representing collision characteristics occurring at the time of or just after collision and a pre-collision sensor for generating a pre-collision signal representing vehicle characteristics occurring just before collision, said collision signal being comprised of said severity and pre-collision signals.

11. A system according to claim 10 wherein said pre-collision signal is generated based on at least vehicle speed and braking characteristics occurring prior to a collision event.

12. A system according to any one of claims 1 to 11 wherein said occupant restraint system includes an airbag assembly with an airbag controller for inflating and deflating an airbag and a seat belt assembly having a seat belt pretensioner mechanism and a seat belt retractor mechanism.

13. A system according to claim 12 wherein said input to said processing unit is comprised of a plurality of input signals (44, 50, 54, 56, 62, 66, 70) including said modifier signal comprised of an occupant presence signal, a child seat signal, and a seat belt usage signal, said occupant signal comprised of an occupant weight signal and an occupant proximity signal, and said collision signal comprised of a collision severity signal and a pre-collision signal.

14. A system according to claim 13 wherein said at least one output signal is comprised of a plurality of output signals (72, 74, 76, 78) including a
variable venting control signal for controlling deflation speed of said airbag, and a retractor control signal for controlling the retraction force of said seat belt retractor mechanism.

15. A system according to claim 12 including a fuzzy logic control system (110) for optimizing said plurality of output signals based on said plurality of input signals.

16. A method for controlling an occupant restraint system comprising the steps of:
(a) generating at least one modifier signal (44, 50, 54, 56, 62, 66, 70) to enable or disable an occupant restraint system based on satisfaction of a predetermined condition;
(b) generating an occupant signal representing multiple occupant characteristics;
(c) generating a collision signal representing vehicle collision characteristics;
(d) transmitting the modifier, occupant, and collision signals as multiple input signals to a processing unit; and
(e) generating at least one output signal (72, 74, 76, 78) based on the input signals to optimize deployment of the occupant restraint system, **characterised in that** step (a) includes the steps of generating a first modifier signal having either a positive occupant presence signal indicating that an occupant is present in a predetermined area or a negative occupant presence signal indicating that the occupant is not in the predetermined area.

17. A method according to claim 16 wherein step (a) includes the steps of generating a second modifier signal having either a positive child seat signal indicating that a child seat is properly installed within the predetermined area or a negative child seat signal indicating that the child seat is not present or is improperly installed within the predetermined area; and generating a third modifier signal having either a positive seat belt usage signal indicating that a seat belt is in an engaged position or a negative seat belt usage signal indicating that the seat belt

18. A method according to claim 16 wherein step (e) includes the step of modifying the output signal to disable the occupant restraint system when either the negative occupant presence signal, the negative child seat signal, or the negative seat belt usage signal is generated.

19. A method according to claim 16 wherein step (e) includes the step of continuing to process the output signal when either the positive occupant presence signal, the positive child seat signal, or the positive seat belt usage signal is generated.

20. A method according to claim 16 wherein step (e) includes utilizing the output signal to control inflation and deflation of an airbag and to control operating of a seat belt assembly having a seat belt pretensioner mechanism and a seat belt retractor mechanism.

21. A method according to claim 16 wherein step (e) includes generating a plurality of output signals including generating a multi-stage inflation control signal for controlling the profile of the airbag, generating a variable venting control signal for controlling deflation speed of the airbag, and generating a retractor control signal for controlling the retraction force of the seat belt retractor mechanism.

22. A method according to claim 21 including programming the processing unit with a fuzzy logic analysis process to generate the plurality of output signals based on the plurality of input signals before step (e).

23. A method according to claim 22 wherein step (b) includes generating an occupant weight signal and an occupant proximity signal indicating position of the occupant relative to the airbag.

24. A method according to claim 23 wherein step (c) includes generating a severity signal indicating vehicle characteristics at or after collision and generating a pre-collision signal indicating vehicle characteristics before collision.

25. A method according to claim 16 including the step of learning vehicle characteristics unique to vehicle type and size by using a neural network.

26. A method according to claim 16 including the step of generating a child seat position signal indicating whether a child seat is installed in a forward or rearward facing position.

27. A method according to claim 16 including utilizing a fuzzy logic analysis process to generate the output signal based on the plurality of input signals before step (e) wherein the fuzzy logic analysis process includes the steps of creating membership functions by assigning names to predetermined values within a designated range; designating rules to be applied to the input signals; evaluating the rules and input signals to form an optimal control decision; and translating the optimal control decision into the output signal.

## Patentansprüche

1. Personenrückhaltesystem (40), welches umfasst:
wenigstens einen Modifikationssensor, welcher ein Modifikationssignal zum Freigeben oder Sperren eines Personenrückhaltesystems erzeugt;
eine Personensensor-Baugruppe (56, 60), welche ein Personensignal erzeugt, das mehrere Personenkenngrößen repräsentiert;
eine Kollisionssensor-Baugruppe (64), welche ein Kollisionssignal erzeugt, das Kollisionskenngrößen des Fahrzeugs repräsentiert; und
eine Verarbeitungseinheit (110) zum Empfangen von Eingangsinformationen, die aus dem besagten Modifikations-, dem besagten Personen- und dem besagten Kollisionssignal bestehen, und zur Erzeugung wenigstens eines Ausgangssignals auf der Basis dieser Eingangsinformationen, welches die Auslösung des besagten Personenrückhaltesystems optimiert;
**dadurch gekennzeichnet, dass** der besagte wenigstens eine Modifikationssensor einen Personenpräsenzsensor (42), um zu bestimmen, ob sich innerhalb eines vorgegebenen Bereiches im Fahrzeug eine Person befindet, umfasst, und wobei das besagte Modifikationssignal als ein positives Modifikationssignal erzeugt wird, wenn sich die Person in dem besagten vorgegebenen Bereich befindet, und als ein negatives Modifikationssignal erzeugt wird, wenn sich die Person nicht in dem besagten vorgegebenen Bereich befindet.

2. System nach Anspruch 1, wobei die Übertragung des besagten negativen Modifikationssignals zu der besagten Verarbeitungseinheit bewirkt, dass das besagte Personenrückhaltesystem gesperrt wird.

3. System nach Anspruch 1 oder 2, wobei der besagte wenigstens eine Modifikationssensor einen Kindersitzsensor (48), um zu bestimmen, ob innerhalb eines vorgegebenen Bereiches ein Kindersitz ordnungsgemäß angebracht ist, umfasst, und wobei das besagte Modifikationssignal als ein positives Modifikationssignal erzeugt wird, wenn der besagte Kindersitz ordnungsgemäß innerhalb des vorgegebenen Bereiches angebracht ist, und als ein negatives Modifikationssignal erzeugt wird, wenn der besagte Kindersitz nicht ordnungsgemäß innerhalb des vorgegebenen Bereiches angebracht ist.

4. System nach Anspruch 3, wobei die Übertragung des besagten negativen Modifikationssignals zu der besagten Verarbeitungseinheit das besagte Personenrückhaltesystem sperrt.

5. System nach Anspruch 3, wobei der besagte wenigstens eine Modifikationssensor einen Kindersitzsensor umfasst, der in der Lage ist zu bestimmen, ob ein Kindersitz dem vorderen Ende oder dem Heck des Fahrzeugs zugewandt ist.

6. System nach einem der Ansprüche 1 bis 3, wobei der besagte wenigstens eine Modifikationssensor einen Sicherheitsgurtbenutzungssensor (52), um zu bestimmen, ob ein Sicherheitsgurt von der Person benutzt wird, umfasst, und wobei das besagte Modifikationssignal als ein positives Modifikationssignal erzeugt wird, wenn sich der besagte Sicherheitsgurt in einer angelegten Position befindet, und als ein negatives Modifikationssignal erzeugt wird, wenn sich der Sicherheitsgurt in einer nicht angelegten Position befindet.

7. System nach Anspruch 6, wobei das besagte wenigstens eine Ausgangssignal ein Aufrollsteuersignal (72) zur Steuerung der Auslösung eines Sicherheitsgurt-Aufrollmechanismus, um den nach vorn gerichteten Impuls einer Person zu verringern, wenn die besagte Verarbeitungseinheit ein positives Modifikationssignal empfängt, und zum Sperren des besagten Sicherheitsgurt-Aufrollmechanismus, wenn die besagte Verarbeitungseinheit ein negatives Modifikationssignal empfängt, umfasst.

8. System nach Anspruch 1, wobei der besagte wenigstens eine Modifikationssensor einen Personenpräsenzsensor (42), um zu bestimmen, ob sich innerhalb eines vorgegebenen Bereiches im Fahrzeug eine Person befindet, einen Kindersitzsensor (48), um zu bestimmen, ob innerhalb des besagten vorgegebenen Bereiches ein Kindersitz ordnungsgemäß angebracht ist, und einen Sicherheitsgurtbenutzungssensor (52), um zu bestimmen, ob ein Sicherheitsgurt von der Person benutzt wird, umfasst, und wobei der besagte Personenpräsenzsensor in der Lage ist, ein Personensignal zu erzeugen, welches positiv ist, wenn sich die Person in dem besagten vorgegebenen Bereich befindet, und negativ ist, wenn sich die Person nicht in dem besagten vorgegebenen Bereich befindet, wobei der besagte Kindersitzsensor in der Lage ist, ein Kindersitzsignal zu erzeugen, welches positiv ist, wenn der besagte Kindersitz ordnungsgemäß innerhalb des besagten vorgegebenen Bereiches angebracht ist, und negativ ist, wenn der besagte Kindersitz nicht ordnungsgemäß innerhalb des besagten vorgegebenen Bereiches angebracht ist, und wobei der besagte Sicherheitsgurtbenutzungssensor in der Lage ist, ein Sicherheitsgurtsignal zu erzeugen, welches positiv ist, wenn sich der besagte Sicherheitsgurt in einer angelegten Position befindet, und negativ ist, wenn sich der Sicherheitsgurt in einer nicht angelegten Position befindet, wobei das besagte Modifikationssignal aus dem besagten Personenpräsenzsignal, dem besagten Kindersitzsignal und dem besagten Sicherheitsgurtsignal besteht.

9. System nach Anspruch 1, wobei die besagte Personensensor-Baugruppe einen Gewichtssensor (56) zur Erzeugung eines Gewichtssignals, welches das Gewicht des Insassen repräsentiert, und einen Personennäherungssensor zur Erzeugung eines Personennäherungssignals, welches die Position des Insassen relativ zu einem Auslösungsbereich für das besagte Personenrückhaltesystem repräsentiert, umfasst, wobei das besagte Personensignal aus dem besagten Gewichts- und dem besagten Näherungssignal besteht.

10. System nach Anspruch 9, wobei die besagte Kollisionssensor-Baugruppe einen Heftigkeitssensor (64) zur Erzeugung eines Heftigkeitssignals, welches die Kollisionskenngrößen repräsentiert, die zum Zeitpunkt der Kollision oder unmittelbar danach vorliegen, und einen Vorkollisionssensor zur Erzeugung eines Vorkollisionssignals, welches die Kenngrößen des Fahrzeugs repräsentiert, die unmittelbar vor der Kollision vorliegen, umfasst, wobei das besagte Kollisionssignal aus dem besagten Heftigkeits- und dem besagten Vorkollisionssignal besteht.

11. System nach Anspruch 10, wobei das besagte Vorkollisionssignal auf der Basis wenigstens der Geschwindigkeit und der Kenngrößen der Bremsung des Fahrzeugs, die vor einem Kollisionsereignis vorliegen, erzeugt wird.

12. System nach einem der Ansprüche 1 bis 11, wobei das besagte Personenrückhaltesystem eine Airbag-Baugruppe mit einem Airbag-Steuergerät zum Aufblasen und Entlüften eines Airbags und eine Sicherheitsgurt-Baugruppe, die einen Sicherheitsgurt-Vorspannmechanismus und einen Sicherheitsgurt-Aufrollmechanismus aufweist, umfasst.

13. System nach Anspruch 12, wobei die besagten Eingangsinformationen der besagten Verarbeitungseinheit aus einer Vielzahl von Eingangssignalen (44, 50, 54, 56, 62, 66, 70) bestehen, welche das besagte Modifikationssignal, welches aus einem Personenpräsenzsignal, einem Kindersitzsignal und einem Sicherheitsgurtbenutzungssignal besteht, das besagte Personensignal, welches aus einem Personengewichtssignal und einem Personennäherungssignal besteht, und das besagte Kollisionssignal, welches aus einem Kollisionsheftigkeitssignal und einem Vorkollisionssignal besteht, umfassen.

14. System nach Anspruch 13, wobei das besagte wenigstens eine Ausgangssignal aus einer Vielzahl von Ausgangssignalen (72, 74, 76, 78) besteht, welche ein Steuersignal der variablen Entlüftung zur Steuerung der Entlüftungsgeschwindigkeit des besagten Airbags und ein Aufrollsteuersignal zur Steuerung der Aufrollkraft des besagten Sicherheitsgurt-Aufrollmechanismus umfassen.

15. System nach Anspruch 12, welches ein Fuzzy-Logik-Steuerungssystem (110) zur Optimierung des-besagten Vielzahl von Ausgangssignalen auf der Basis der besagten Vielzahl von Eingangssignalen umfasst.

16. Verfahren zur Steuerung eines Personenrückhaltesystems, welches die folgenden Schritte umfasst:
(a) Erzeugen wenigstens eines Modifikationssignals (44, 50, 54, 56, 62, 66, 70), um auf der Basis der Erfüllung einer vorgegebenen Bedingung ein Personenrückhaltesystem freizugeben oder zu sperren;
(b) Erzeugen eines Personensignals, welches mehrere Personenkenngrößen repräsentiert;
(c) Erzeugen eines Kollisionssignals, welches Kollisionskenngrößen des Fahrzeugs repräsentiert;
(d) Übertragen des Modifikations-, des Personen- und des Kollisionssignals als mehrere Eingangssignale zu einer Verarbeitungseinheit; und
(e) Erzeugen wenigstens eines Ausgangssignals (72, 74, 76, 78) auf der Basis der Eingangssignale, um die Auslösung des Personenrückhaltesystems zu optimieren, **dadurch gekennzeichnet, dass** Schritt (a) die Schritte des Erzeugens eines ersten Modifikationssignals umfasst, welches entweder ein positives Personenpräsenzsignal, das anzeigt, dass sich eine Person in einem vorgegebenen Bereich befindet, oder ein negatives Personenpräsenzsignal, das anzeigt, dass sich die Person nicht in dem vorgegebenen Bereich befindet, aufweist.

17. Verfahren nach Anspruch 16, wobei Schritt (a) die Schritte umfasst: Erzeugen eines zweiten Modifikationssignals, welches entweder ein positives Kindersitzsignal aufweist, das anzeigt, dass ein Kindersitz ordnungsgemäß innerhalb des vorgegebenen Bereiches angebracht ist, oder ein negatives Kindersitzsignal, das anzeigt, dass der Kindersitz innerhalb des vorgegebenen Bereiches nicht vorhanden oder nicht ordnungsgemäß angebracht ist; und Erzeugen eines dritten Modifikationssignals, welches entweder ein positives Sicherheitsgurtbenutzungssignal aufweist, das anzeigt, dass sich ein Sicherheitsgurt in einer angelegten Position befindet, oder ein negatives Sicherheitsgurtbenutzungssignal, das anzeigt, dass sich der Sicherheitsgurt in einer nicht angelegten Position befindet.

18. Verfahren nach Anspruch 16, wobei Schritt (e) den Schritt der Änderung des Ausgangssignals, so dass das Personenrückhaltesystem gesperrt wird, wenn entweder das negative Personenpräsenzsignal oder das negative Kindersitzsignal oder das negative Sicherheitsgurtbenutzungssignal erzeugt worden ist, umfasst.

19. Verfahren nach Anspruch 16, wobei Schritt (e) den Schritt der Fortsetzung der Verarbeitung des Ausgangssignals, wenn entweder das positive Personenpräsenzsignal oder das positive Kindersitzsignal oder das positive Sicherheitsgurtbenutzungssignal erzeugt worden ist, umfasst.

20. Verfahren nach Anspruch 16, wobei Schritt (e) die Verwendung des Ausgangssignals, um das Aufblasen und die Entlüftung eines Airbags zu steuern und um die Funktion einer einen Sicherheitsgurt-Vorspannmechanismus und einen Sicherheitsgurt-Aufrollmechanismus aufweisenden Sicherheitsgurt-Baugruppe zu steuern, umfasst.

21. Verfahren nach Anspruch 16, wobei Schritt (e) die Erzeugung einer Vielzahl von Ausgangsignalen umfasst, einschließlich der Erzeugung eines Steuersignals des mehrstufigen Aufblasens zur Steuerung des Druckprofils des Airbags, der Erzeugung eines Steuersignals der variablen Entlüftung zur Steuerung der Entlüftungsgeschwindigkeit des Airbags und der Erzeugung eines Aufrollsteuersignals zur Steuerung der Aufrollkraft des Sicherheitsgurt-Aufrollmechanismus.

22. Verfahren nach Anspruch 21, welches die Programmierung der Verarbeitungseinheit mit einem Fuzzy-Logik-Analyseprozess umfasst, um die Vielzahl von Ausgangssignalen auf der Basis der Vielzahl von Eingangssignalen vor Schritt (e) zu erzeugen.

23. Verfahren nach Anspruch 22, wobei Schritt (b) die Erzeugung eines Personengewichtssignals und eines Personennäherungssignals, welches die Position des Insassen relativ zum Airbag angibt, umfasst.

24. Verfahren nach Anspruch 23, wobei Schritt (c) die Erzeugung eines Heftigkeitssignals, welches Kenngrößen des Fahrzeugs bei oder nach einer Kollision angibt, und die Erzeugung eines Vorkollisionssignals, welches Kenngrößen des Fahrzeugs vor einer Kollision angibt, umfasst.

25. Verfahren nach Anspruch 16, welches den Schritt des Lernens von für den Fahrzeugtyp und die Fahrzeuggröße spezifischen Fahrzeugmerkmalen durch Verwendung eines Neuronennetzes umfasst.

26. Verfahren nach Anspruch 16, welches den Schritt des Erzeugens eines Kindersitzpositionssignals umfasst, welches anzeigt, ob ein Kindersitz in einer dem vorderen Ende oder dem Heck des Fahrzeugs zugewandten Position angebracht ist.

27. Verfahren nach Anspruch 16, welches die Verwendung eines Fuzzy-Logik-Analyseprozesses umfasst, um das Ausgangssignal auf der Basis der Vielzahl von Eingangssignalen vor Schritt (e) zu erzeugen, wobei der Fuzzy-Logik-Analyseprozess die Schritte des Erzeugens von Zugehörigkeitsfunktionen durch Zuordnen von Namen zu vorgegebenen Werten innerhalb eines bezeichneten Bereiches; des Angebens von auf die Eingangssignale anzuwendenden Regeln; des Auswertens der Regeln und Eingangssignale zur Erstellung einer optimalen Steuerungsentscheidung; und des Übersetzens der optimalen Steuerungsentscheidung in das Ausgangssignal umfasst.

## Revendications

1. Système (40) de retenue d'un occupant, comprenant :
au moins un capteur modificateur qui produit un signal modificateur pour activer ou désactiver un système de retenue d'occupant ;
un montage (56, 60) capteur d'occupant qui produit un signal d'occupant représentant de multiples caractéristiques d'un occupant ;
un montage (64) capteur de collision qui produit un signal de collision représentant des caractéristiques de collision d'un véhicule ; et
une unité (110) de traitement pour recevoir une entrée constituée des signaux modificateur, d'occupant, et de collision et pour produire au moins un signal de sortie sur la base de l'entrée qui optimise le déploiement du système de retenue d'occupant ;
**caractérisé en ce que** ledit au moins un capteur modificateur comporte un capteur (42) de présence d'un occupant pour déterminer si oui ou non un occupant est présent dans une zone déterminée à l'avance dans le véhicule et dans lequel le signal modificateur est produit sous la forme d'un signal modificateur positif lorsque l'occupant est dans la zone déterminée à l'avance et produit un signal modificateur négatif lorsque l'occupant n'est pas dans la zone déterminée à l'avance.

2. Système suivant la revendication 1, dans lequel la transmission du signal modificateur négatif à l'unité de traitement a pour fonction de désactiver le système de retenue d'occupant.

3. Système suivant la revendication 1 ou 2, dans lequel ledit capteur modificateur comprend un capteur (48) de siège d'enfant pour déterminer si oui ou non un siège d'enfant est correctement placé dans une zone déterminée à l'avance et dans lequel le signal modificateur est produit sous la forme d'un signal modificateur positif lorsque le siège d'enfant est correctement placé dans la zone déterminée à l'avance et est produit sous la forme d'un signal modificateur négatif lorsque le siège d'enfant est incorrectement placé à l'intérieur de la zone déterminée à l'avance.

4. Système suivant la revendication 3, dans lequel la transmission du signal modificateur négatif à l'unité de traitement désactive le système de retenue d'occupant.

5. Système suivant la revendication 3, dans lequel ledit au moins un capteur modificateur comporte un capteur de siège d'enfant ayant pour fonction de déterminer si un siège d'enfant est tourné vers l'avant ou vers l'arrière.

6. Système suivant l'une quelconque des revendications 1 à 3, dans lequel ledit au moins un capteur modificateur comprend un capteur (52) d'utilisation de ceinture de sécurité pour déterminer si oui ou non un harnais d'une ceinture de sécurité est en cours d'utilisation par l'occupant et dans lequel le signal modificateur est produit sous la forme d'un signal modificateur lorsque le harnais de la ceinture de sécurité est en position engagée et est produit sous la forme d'un signal modificateur négatif lorsque le harnais de ceinture de sécurité est en position dégagée.

7. Système suivant la revendication 6, dans lequel ledit au moins un signal de sortie inclut un signal (72) de commande de rétracteur pour commander le déploiement d'un rétracteur de ceinture de sécurité afin de réduire le moment cinétique vers l'avant d'un occupant lorsque l'unité de traitement reçoit un signal modificateur positif et pour désactiver le rétracteur de ceinture de sécurité lorsque l'unité de traitement reçoit un signal modificateur négatif.

8. Système suivant la revendication 1, dans lequel ledit au moins un capteur modificateur comprend un capteur (42) de présence d'occupant pour déterminer si oui ou non un occupant est présent dans une zone déterminée à l'avance dans le véhicule, un capteur (48) de siège d'enfant pour déterminer si oui ou non un siège d'enfant est correctement placé dans la zone déterminée à l'avance, et un capteur (52) d'utilisation de ceinture de sécurité pour déterminer si oui ou non un harnais d'une ceinture de sécurité est en cours d'utilisation par l'occupant et dans lequel le capteur de présence d'occupant a pour fonction de produire un signal d'occupant qui est positif lorsque l'occupant est dans la zone déterminée à l'avance et négatif lorsque l'occupant n'est pas dans la zone déterminée à l'avance, le capteur de siège d'enfant ayant pour fonction de produire un signal de siège d'enfant qui est positif lorsque le siège d'enfant est correctement placé dans la zone déterminée à l'avance et négatif lorsque le siège d'enfant est incorrectement placé dans la zone déterminée à l'avance, et le capteur d'utilisation de ceinture de sécurité ayant pour fonction de produire un signal de ceinture de sécurité qui est positif lorsque le harnais de la ceinture de sécurité est en position engagée et négatif lorsque le harnais de la ceinture de sécurité est en position dégagée, le signal modificateur étant constitué des signaux de présence d'occupant, de siège d'enfant et de ceinture de sécurité.

9. Système suivant la revendication 1, dans lequel le montage capteur d'occupant comporte un capteur (56) de poids pour produire un signal de poids représentant le poids d'un occupant et un capteur de proximité d'occupant pour produire un signal de proximité d'occupant représentant la position d'un occupant par rapport à une zone de déploiement du système de retenue d'occupant, le signal d'occupant étant constitué des signaux de poids et de proximité.

10. Système suivant la revendication 9, dans lequel le montage de capteur de collision comporte un capteur (64) de gravité pour produire un signal de gravité représentant des caractéristiques de collisions se produisant à l'instant d'une collision ou immédiatement après et un capteur de pré-collision pour produire un signal de pré-collision représentant des caractéristiques du véhicule se produisant immédiatement avant une collision, le signal de collision étant constitué des signaux de gravité et de pré-collision.

11. Système suivant la revendication 10, dans lequel le signal de pré-collision est produit sur la base d'au moins la vitesse du véhicule et de caractéristiques de freinage se produisant avant un événement de collision.

12. Système suivant l'une quelconque des revendications 1 à 11, dans lequel le système de retenue d'occupant comporte un montage de coussin de sécurité gonflable comportant une unité de commande de coussin de sécurité gonflable pour gonfler et dégonfler un coussin de sécurité gonflable et un montage de ceinture de sécurité ayant un mécanisme prétendeur de ceinture de sécurité et un mécanisme rétracteur de ceinture de sécurité.

13. Système suivant la revendication 12, dans lequel l'entrée fournie à l'unité de traitement est constituée d'une pluralité de signaux d'entrée (44, 50, 54, 56, 62, 66, 70) incluant le signal modificateur constitué d'un signal de présence d'occupant, d'un signal de siège d'enfant, et d'un signal d'utilisation de ceinture de sécurité, le signal d'occupant étant constitué d'un signal de poids d'occupant et d'un signal de proximité d'occupant, et le signal de collision étant constitué d'un signal de gravité de collision et d'un signal de pré-collision.

14. Système suivant la revendication 13, dans lequel ledit au moins un signal de sortie est constitué d'une pluralité de signaux de sortie (72, 74, 76, 78) incluant un signal de commande d'éjection variable pour commander la vitesse de dégonflage du coussin de sécurité gonflable, et un signal de commande de rétracteur pour commander la force de rétraction du mécanisme rétracteur de courroie de sécurité.

15. Système suivant la revendication 12, comportant un système (110) de commande à logique floue pour optimiser la pluralité de signaux de sortie sur la base de la pluralité de signaux d'entrée.

16. Procédé pour commander un système de retenue d'occupant, comprenant les étapes consistant à :
(a) produire au moins un signal modificateur (44, 50, 54, 56, 62, 66, 70) pour activer ou désactiver un système de retenue d'occupant sur la base du fait qu'une condition déterminée à l'avance est satisfaite ;
(b) produire un signal d'occupant représentant de multiples caractéristiques d'un occupant ;
(c) produire un signal de collision représentant des caractéristiques de collision d'un véhicule ; et
(d) transmettre les signaux modificateur, d'occupant, et de collision sous la forme de signaux d'entrée multiples à une unité de traitement ; et
(e) produire au moins un signal de sortie (72, 74, 76, 78) sur la base de signaux d'entrée, afin d'optimiser le déploiement du système de retenue d'occupant,
**caractérisé en ce que** l'étape (a) comprend les étapes consistant à produire un premier signal modificateur ayant soit un signal de présence d'occupant positif indiquant qu'un occupant est présent dans une zone déterminée à l'avance, soit un signal de présence négatif indiquant que l'occupant n'est pas dans la zone déterminée à l'avance.

17. Procédé suivant la revendication 16, dans lequel l'étape (a) comprend les étapes consistant à produire un deuxième signal modificateur ayant soit un signal de siège d'enfant positif indiquant qu'un siège d'enfant est correctement installé dans la zone déterminée à l'avance, soit un signal de siège d'enfant négatif indiquant que le siège d'enfant n'est pas présent ou est incorrectement installé dans la zone déterminée à l'avance ; et produire un troisième signal modificateur ayant soit un signal d'utilisation de ceinture de sécurité positif, indiquant qu'une ceinture de sécurité est en position engagée, soit un signal d'utilisation de ceinture de sécurité négatif indiquant que la ceinture de sécurité est en position dégagée.

18. Procédé suivant la revendication 16, dans lequel l'étape (e) comprend les étapes consistant à modifier le signal de sortie pour désactiver le système de retenue d'occupant lorsque soit le signal de présence d'occupant négatif, soit le signal de siège d'enfant négatif, soit le signal d'utilisation de ceinture de sécurité négatif est produit.

19. Procédé suivant la revendication 16, dans lequel l'étape (e) comprend l'étape consistant à poursuivre le traitement du signal de sortie lorsque soit le signal de présence d'occupant positif, soit le signal de siège d'enfant positif, soit le signal d'utilisation de ceinture de sécurité positif est produit.

20. Procédé suivant la revendication 16, dans lequel l'étape (e) consiste à utiliser le signal de sortie pour commander le gonflage et le dégonflage d'un coussin de sécurité gonflable et pour commander le fonctionnement d'un montage de ceinture de sécurité ayant un mécanisme prétendeur de ceinture de sécurité et un mécanisme rétracteur de ceinture de sécurité.

21. Procédé suivant la revendication 16, dans lequel l'étape (e) consiste à produire une pluralité de signaux de sortie consistant à produire un signal de commande de gonflage à plusieurs stades pour commander le profil du coussin de sécurité gonflable, produire un signal de commande d'éjection variable pour commander la vitesse de dégonflage du coussin de sécurité gonflable, et produire un signal de commande de rétracteur pour commander la force de rétraction du mécanisme rétracteur de ceinture de sécurité.

22. Procédé suivant la revendication 21, comprenant la programmation de l'unité de traitement avec un processus d'analyse à logique floue pour produire la pluralité de sorties de signaux sur la base de la pluralité de signaux d'entrée avant l'étape (e).

23. Procédé suivant la revendication 22, dans lequel l'étape (b) consiste à produire un signal de poids d'occupant et un signal de proximité d'occupant indiquant la position de l'occupant par rapport au coussin de sécurité gonflable.

24. Procédé suivant la revendication 23, dans lequel l'étape (c) consiste à produire un signal de gravité indiquant des caractéristiqués du véhicule au moment de, ou après la collision, et à produire un signal de pré-collision indiquant des caractéristiques du véhicule avant la collision.

25. Procédé suivant la revendication 16, comprenant l'étape consistant en l'apprentissage de caractéristiques de véhicule propres au type et à la taille du véhicule en utilisant un réseau de neurones.

26. Procédé suivant la revendication 16, comprenant l'étape consistant à produire un signal de position de siège d'enfant indiquant si un siège d'enfant est installé en position tournée vers l'avant ou vers l'arrière.

27. Procédé suivant la revendication 16, comprenant un processus d'analyse à logique floue pour produire le signal de sortie sur la base de la pluralité de signaux d'entrée avant l'étape (e), dans lequel le processus d'analyse à logique floue comprend les étapes consistant à créer des fonctions d'appartenance en affectant des noms à des valeurs déterminées à l'avance dans une gamme désignée ; désigner des règles devant être appliquées aux signaux d'entrée ; évaluer les règles et les signaux d'entrée pour former une décision de commande optimale; et traduire la décision de commande optimale en le signal de sortie.
